# EUROPÄISCHE PATENTSCHRIFT

(11) **EP 2 567 609 B1**
(45) Veröffentlichungstag und Bekanntmachung des Hinweises auf die Patenterteilung: **01.02.2017**
(21) Anmeldenummer: 12006246.8
(22) Anmeldetag: 05.09.2012
(51) Int. Cl.: A01F 25/20

(54) **Gerät zur Futterentnahme aus Flachsilos**
Device for removing feed from flat silos
Appareil destiné à prélever du fourrage depuis des silos plats

(30) Priorität: 09.09.2011 DE 102011053437; 06.03.2012 DE 102012004221
(43) Veröffentlichungstag der Anmeldung: 13.03.2013
(73) Patentinhaber: B. Strautmann & Söhne GmbH u. Co. KG, 49196 Bad Laer (DE)
(72) Erfinder: Strautmann, Klaus-Peter, 48291 Telgte (DE); Marquering, Johannes, Dr., 49176 Hilter (DE); Heggemann, Norbert, 49196 Bad Laer (DE)
(74) Vertreter: Träger, Denis

(56) Entgegenhaltungen:
- EP-B1- 1 712 123
- WO-A2-2009/060442
- DE-U1- 29 705 587
- DE-U1-202004 007 874
- DE-U1-202006 004 816

## Beschreibung

Die Erfindung betrifft ein Gerät zur Futterentnahme ,welches schwenkbar an einem Futtermischwagen angebracht ist und am äußeren Ende seines mit einem Förderband ausgestatteten Schwenkarms eine Entnahmevorrichtung trägt, welche stirnseitig an Flachsilos Silage abtrennt und dieses einem Förderband zur Weiterleitung in einen Mischbehälter übergibt, wobei die Entnahmebreite der Trennvorrichtung die Förderschachtbreite des Schwenkarms merklich übersteigt. Die Entnahmevorrichtung ist mit einer Förderwalze und einer verschwenkbaren Leitvorrichtung ausgestattet. Die Förderwalze umfasst Förderspiralen, deren Förderrichtung jeweils von außen zur Mitte gerichtet ist, so dass die mit der Förderwalze in Kontakt kommende Silage dem Förderband zugeführt wird. Die Förderwalze fördert das abgetrennte Futter innerhalb eines durch die Innenseiten von Stirnwand und Gehäuse gebildeten Förderkanals zur Öffnung des Förderschachtes.

Das Futter wird beispielsweise aus einem Fahrsilo abgetrennt und aufgenommen. Das Gerät ist darüber hinaus auch für weitere Futterentnahmeverfahren geeignet, wie die Aufnahme von zu Ballen verpresstem Futtermaterial aus Stroh oder Heu sowie die Aufnahme von Kraftfutter oder Spezialprodukten aus einem Vorratshaufen.

Geräte dieser Art werden in landwirtschaftlichen Betrieben zum Entnehmen von Viehfutter aus Flachsilos verwendet. Zur Entnahme des Futters wird hierbei die Entnahmevorrichtung an einer Stirnseite des Flachsilos derart an der Oberkante angesetzt, dass beim Absenken ein Futterstreifen abgetragen wird.

Zur Abtragung des Futters werden im Allgemeinen hochtourige Fräswalzen verwendet, die das von Fräszinken abgetrennte Material, mittels ihrer Form und Anordnung, gegebenenfalls durch Unterstützung von profilierten Wurfschaufeln oder Schneckenspiralen, innerhalb des die Fräswalze ummantelnden Gehäuses, von der größeren Entnahmebreite zur schmaleren Förderschachtbreite schleudern und verschieben. Die Fräswalzen werfen das Futter im Allgemeinen unterschlächtig ab.

Unter "unterschlächtig" wird verstanden, dass eine Fräs- oder Förderwalze eine Drehrichtung aufweist, die das abgefräste oder zu fördernde Futter unterhalb der Walze entlang führt.

Unter "oberschlächtig" wird verstanden, dass eine Fräs- oder Förderwalze eine Drehrichtung aufweist, die das abgefräste oder zu fördernde Futter oberhalb der Walze entlang führt.

Oberschlächtig arbeitende oder mit wechselnder Drehrichtung arbeitende Fräswalzen sind bekannt, werden jedoch vorwiegend dort eingesetzt, wo das Futter direkt, mittels hoher Drehzahlen, und entsprechend hoher Zentrifugalkräfte, ohne zusätzliche Förderelemente in einen Transport- oder Mischbehälter geschleudert wird.

Aus der Schrift WO 2009/060442 A2 ist ein gattungsgemäßes Gerät zur Futterentnahme bekannt, bei welchem das aus einem Vorratshaufen zu entnehmende Futtergut mittels einer kombinierten Fräs-Förderwalze zunächst vom Silohaufen abgetrennt und dann über einen als Förderband ausgelegten Elevator in einen Mischbehälter gefördert wird. Die Fräs-Förderwalze umfasst eine Trommel, an deren Oberseite Förderspiralen angeordnet sind, welche bei oberschlächtiger Drehrichtung der Fräs-Förderwalze das abgefräste Futtergut zur Mitte und damit in Richtung auf den zentral angeordneten Eingangsschacht fördern. Die Förderspirale ist zudem mit Schneidmessern bestückt, welche bei Rotation der Walze die Fräsarbeit leisten. Oberhalb der Fräs-Fördertrommel ist eine verschwenkbare Haube angeordnet, welche verhindert, dass das abgetrennte Futter einen durch Haube und Gehäusewand gebildeten Förderkanal verlässt.

Bei der Viehfütterung wird, um eine bestmögliche Tiergesundheit und -Leistungsfähigkeit zu erzielen, die Erhaltung einer natürlichen Futterstruktur angestrebt. Bei der Entnahme von Silagefutter kann die Futterstruktur beeinträchtigt werden, es wird daher die Optimierung der Entnahmevorrichtung durch Änderungen an den Arbeitsorganen und deren Arbeitsweise, angestrebt.

Bei den unterschlächtig fördernden Fräswalzen wird das von den Fräszinken unter hohem Leistungsbedarf mehr oder weniger reißend und schneidend abgetrennte Futter, eine angeraute Oberfläche hinterlassend, zunächst auf den unterhalb der Fräswalze noch nicht erfassten Teil des Futterstreifens, verstärkt durch die über Hubzylinder gesteuerte Abwärtsbewegung des Schwenkarms, gedrückt und teils zerrieben, danach in den Trommelmantel geschleudert und in Richtung auf den Förderschacht verschoben. Diese Vorgänge sind zur Erhaltung der Futterstruktur nicht optimal geeignet und erfordern einen relativ hohen Leistungsbedarf.

An den angerauten Schnittflächen der Flachsilos können Sauerstoff und Feuchtigkeit leichter in den Silostock eindringen, als an glatten Schnittflächen, was Nachgärungen bewirkt und zum Verlust an Futterqualität und -struktur führt.

Die hohe Reißgeschwindigkeit der Fräswalze, das Zerreiben des Futters beim Überstreichen des noch nicht abgetragenen Futterstreifens, die hohen Aufprallkräfte und Querbewegungen, im die Fräswalze ummantelnden Gehäuse, sind zur Erhaltung der Futterstruktur ebenfalls nachteilig.

In der Offenlegungsschrift DE 10 2007 022 651 A1 ist zur schonenderen Behandlung der Futterstruktur eine Ausführung beschrieben, die auf spiralförmigen Förderelementen angeordnete Räumfinger aufweist, welche in den Silostock eindringen und dabei Futter aus diesem herausziehen. Das Futter wird weiterhin unterschlächtig mit hoher Drehzahl und hohem Kraftbedarf entnommen.

Eine weitere Ausführung zur schonenden Futterbehandlung, nach der europäischen Patenanmeldung EP 1712123 B1 zeigt eine auf einem separaten Schwenkarm angeordnete Walze mit einer vorgeordneten Schneidvorrichtung, hierbei wird das abgetrennte Futter in eine an einem weiteren Schwenkarm angebrachte Aufnahmewanne abgeworfen und in dieser einem an diesem Schwenkarm angeordneten Förderband zugeführt. Diese aufwendig gestaltete Ausführung ist schwerer und teuerer als bisherige und erfordert einen erhöhten Bedienungsaufwand.

Das Gebrauchsmuster DE 29705587 U1 zeigt eine Vorrichtung zum Abtrennen und Aufnehmen von Silagefutter aus Flachsilos bei der ein, an einem separaten Schwenkarm teleskopisch verschiebbares Schneidschild zur Futterabtrennung eingesetzt wird. Das Futter fällt hierbei zu Boden, bzw. in eine Wanne und wird von einer mit Schneckenspiralen besetzten Walze einem in einen Schwenkarm integrierten Förderkanal zugeführt. Bei dieser aufwendigen und teueren Ausführung wird das Futter durch die unterschlächtige Futterführung entlang der Wanne in seiner Struktur geschädigt.

Weiterhin ist aus DE 4210479 A1 eine Vorrichtung zur Entnahme von Silage bekannt, welche das Silagegut aus dem Silostock in gewölbten Scheiben abschneidet und mittels einer Auflös- und Fördertrommel zerkrümelt und in gezielter Wurfparabel nach hinten oben in einen Sammelwagen wegfördert. Die Wurfbahn des abzuschleudernden, zerkrümelten Silagefutters kann mittels eines einstellbaren Leitschirms variiert werden um so das Futter gleichförmig in den Sammelwagen einzubringen und die Wurfweite an unterschiedliche Längen des Sammelwagens anzupassen. Nachteilig an dieser Vorrichtung ist, dass die Fördertrommel das Futter lediglich erfasst und nach hinten schleudert. Eine Förderung bzw. Weiterleitung des Futters in einen mittleren Bereich der Förderwalze ist nicht vorgesehen. Diese Vorrichtung ist deshalb auch nicht geeignet, um an einem Futtermischwagen angebracht zu werden, bei dem das abgetrennte Futter zunächst einem im mittleren Bereich angeordneten Förderschacht zugeführt wird, von dem aus es dann in den Sammelbehälter gefördert wird.

Weiterhin ermöglicht die in DE 4210479 A1 offenbarte Leitvorrichtung lediglich eine Beeinflussung der Wurfparabel des von der Fördertrommel unter Nutzung der Zentrifugalkraft abgeschleuderten Futters. Auf die Erreichbarkeit und Aufnahme von Futterhaufen, welche sich durch die bei der Entnahmearbeit anfallenden Rieselverluste am Boden vor der Schnittfläche des Silostocks ansammeln, hat die Verschwenkung dieser Leitvorrichtung keinen Einfluss.

Aufgabe der vorliegenden Erfindung ist es, ein Gerät zur Futterentnahme aus Flachsilos vorzuschlagen, mit welchem das Futter in einer die Struktur des Futters schonenden Weise entnommen werden kann, wobei der für die Entnahme erforderliche Kraftbedarf reduziert ist und das abgetrennte Futter verlustarm einem nachgelagerten Förderband zugeführt wird.

Diese Aufgabe wird dadurch gelöst, dass bei einem Gerät zur Futterentnahme nach dem Oberbegriff des Anspruches 1 die Leitvorrichtung eine Stirnwand umfasst, an welcher am unteren Ende ein Schneidbalken angeordnet ist und wobei die Stirnwand den Schneidbalken trägt, so dass bei der Futterentnahme aus einem Flachsilo der Schneidbalken das Futter aus dem Silostock abtrennt und dieses mit der dahinter liegenden Förderwalze weggeleitet wird.

Mit dem Schneidbalken wird das Futter strukturschonend aus dem Silostock abgetrennt, so dass dieses mit einer dahinter liegenden Förderwalze weggeleitet wird.

Um die Futterstruktur bei der Entnahme aus Flachsilos möglichst weitgehend zu erhalten, wird erfindungsgemäß vorgesehen, die Abtrennung des Futters vom Silostock mittels einer Schneidvorrichtung exakter auszuüben. Separat vom Silostock abgetrenntes Futter hinterlässt eine saubere Schnittfläche und lässt sich strukturschonend von einer Förderwalze übernehmen und weiterbefördern, wobei die oberschlächtige Futterführung der Förderwalze nennenswerte Reibverluste vermeidet.

Die erfindungsgemäße Unterteilung des kraftaufwendigen und strukturschädigenden Fräsvorgangs in:
- einen Abtrenn- und Abnahmevorgang, der durch einen Schneidbalken realisiert wird, und
- einen Transportvorgang, der durch die Übertragung der Quertransportfunktion auf eine dem Schneidbalken nachgeordnete Förderwalze erfolgt,
trägt außer zur schonenderen Strukturbehandlung des Futters auch zu einem Absenken der Arbeits- und Energiekosten und zur geringeren Beanspruchung der Arbeitsorgane bei.

Die durch die Verbesserung erzielte Verminderung des Leistungsbedarfes ermöglicht z.B. den Druck in der Hydraulikanlage zu mindern, was die hydraulischen Antriebseinheiten merklich entlastet und verbilligt. Da ein spürbar verringerter Leistungsbedarf vom Antriebsmotor des zugehörigen Futtermischwagens benötigt wird, sinkt auch der Kraftstoffverbrauch, was die Betriebkosten senkt. Durch die leichteren Bauteile verringern sich Anschaffungs- und Ersatzkosten.

Durch die Verschwenkbarkeit einer beim Schneidvorgang Futter führenden Leitvorrichtung wird ermöglicht, dass bei hochgeschwenkter Leitvorrichtung, die bei der Entnahmearbeit stets anfallenden Rieselverluste, welche bei abgesenkter Leitvorrichtung nicht erreichbar sind, sich mühelos sauber aufnehmen lassen. Ebenso wird die Aufnahme von haufenförmig am Boden lagernden Futtermitteln auf einfache Art möglich.

In einer vorteilhaften Ausgestaltung ist die Leitvorrichtung um eine zur Achse der Förderwalze parallel versetzte Mittelachse verschwenkbar. Auf kinematisch einfache Art und Weise kann die Leitvorrichtung so von Position A in Position B hochgeschwenkt werden wobei sich durch die versetzt angeordnete Achsen die Leitvorrichtung an der Abstreiferleiste und dem Gehäusemantel der Förderwalze vorbeibewegen kann. Beim Verschwenken von Position B in Position A wird unterhalb der Stirnwand der Leitvorrichtung ein sich an den unterhalb des Gehäusemantels befindlichen Kanal anschließender Förderkanal ausgebildet. Bei in Endstellung (Position A) verschwenkter Leitvorrichtung schließt die Leitvorrichtung sich an die Abstreifleiste an, so dass eine strömungstechnisch besonders günstige Konstellation gegeben ist und das vom Schneidbalken abgetrennte Futter widerstandsarm in Richtung Förderschacht gefördert werden kann.

Eine weitere vorteilhafte Anwendung der schwenkbaren Leitvorrichtung ergibt sich daraus, dass bei in Stellung A fixiertem, unbeweglichem Schneidbalken, die Entnahmehöhe bei in höchster Stellung C verschwenkter Entnahmevorrichtung durch die Unterkante des Schneidbalkens begrenzt wird. Diese an sich maximale Entnahmehöhe kann jedoch zumindest etwas gesteigert werden, wenn der Schneidbalken verschwenkbar ist. Bei nach oben in Stellung B verschwenktem Schneidbalken kann der Futtermischwagen und mit ihm das Gerät zur Futterentnahme soweit an das Flachsilo herangefahren werden, bis die Förderwalze in Kontakt zum Silo kommt. Zwar dient die Förderwalze nicht der Abtrennung, sondern dem Transport der vom Schneidbalken abgetrennten Silage, jedoch kann in der beschriebenen Stellung zunächst der Schneidbalken von Position B in Position A abgesenkt werden und dabei die an der Förderwalze anliegende Silage abtrennen. Die Förderwalze übernimmt die so abgetrennte Silage und transportiert sie in Richtung Förderband. Sobald der Schneidbalken die Position A erreicht hat, kann dann das gesamte Gerät zur Futterentnahme abwärts geschwenkt werden, wobei der Schneidbalken die Silage kontinuierlich schneidet und die Förderwalze die abgeschnitten Silage zum Förderband transportiert.

Günstig ist es, wenn die am Gehäusemantel angeordnete Abstreifleiste bis nah an die Innenseite der vom Radius (R) gebildeten Rundung der Stirnwand heranreicht. Hierdurch minimiert sich der Spalt zwischen Leitvorrichtung und Abstreiferkante, wodurch Bröckel- und Wurfverluste minimiert werden und sich der Förderwiderstand reduziert.

Bevorzugterweise ist die Förderwalze am äußeren Umfang ihrer Förderspiralen mit Zacken versehen. Hierdurch verbessert sich die Gutannahme. Der Schlupf zwischen Förderwalze und Fördergut wird reduziert. Nicht ausgeschlossen sind auch andere Maßnahmen zur Verbesserung der Gutannahme, wie beispielsweise eine Profilierung der Oberflächen oder die Ausstattung der Förderspiralen insbesondere an Ihrer Oberseite mit einem speziellen Belag.

Von Vorteil ist es, wenn die Förderwalze in einer Überkopf fördernden Drehrichtung rotiert. Bei derart rotierender Förderwalze sind die schneckenförmigen Förderspiralen so angebracht, dass ihre Förderrichtung zum Förderband hin gerichtet ist. Das aus dem Flachsilo abgetrennte Futter wird bei sich absenkender Entnahmevorrichtung so nach oben und zur Mitte hin weggefördert, dass die Gefahr von den Kraftbedarf erhöhenden Material-Stauungen sowie die Gefahr von die Struktur schädigenden Futterquetschungen reduziert werden.

Um die zu entnehmende Futterscheibe auch an ihren senkrecht zum Messerbalken stehenden Seitenflächen schneidend zu entnehmen, ist es weiterhin vorteilhaft, wenn die Förderwalze an ihren äußeren Enden mit Schneidklingen besetzt ist. Während der Schneidbalken die Schneidarbeit an der Vorderseite übernimmt, übernehmen die an den äußeren Enden der Förderwalzen vorgesehen Schneidklingen die seitliche Schneidarbeit.

Nicht ausgeschlossen sein soll aber auch, dass an Stelle des Linienförmig ausgebildeten Messerbalkens ein L- oder U-förmig ausgebildeter Messerbalken mit Schneidmesser an einer oder beiden Seiten verwendet wird.

In einer weiteren Ausführungsform sind die Hebel am Anschluss zur Stirnwand verkröpft. Die die Leiteinrichtung und Schneidbalken tragenden Hebel sind so während des Entnahmevorgangs gegenüber dem Flachsilo freigestellt.

Weiterhin ist es von Vorteil, die die Leitvorrichtung tragenden Hebel sichelförmig auszuführen. Hierdurch weist bei in Arbeitsstellung Position A befindlicher Leitvorrichtung der zur Schwenkachse weisende Teil der Steuerarme eine in etwa vertikale Position auf, so dass die Förderwalze zu ihren Endseiten hin weitgehend freigestellt ist.

In einer weiteren Ausführungsform definiert bei in Position (A) eingeschwenktem Schneidbalken der Abstand von der Messerspitze des Schneidbalkens zur Drehachse des Gerätes zur Futterentnahme einen Radius (R1), der kleiner ist, als ein durch den Abstand zwischen einem äußeren Konturpunkt des Schneidbalkens und der Drehachse des Gerätes zur Futterentnahme definierter Radius (R2). Hierdurch wird erreicht, dass die Silage zunächst abgeschnitten und die Anschnittfläche des Silagestockes anschließend durch den Druck des rückwärtigen Schneidbalkens eine glatte Oberfläche erhält, wobei die Poren in der Anschnittfläche verschlossen werden. Das Eindringen von Luft und damit Sauerstoff in das Flachsilo wird so erschwert und die Gefahr einer unerwünschten Nachgärung von Futtermaterial oder sonstiger Fäulnisbildung reduziert.

Weiterhin ist es günstig, wenn eine Restgutaufnahme bei in Position B verschwenktem Schneidbalken erfolgt. Unter Restgut ist hierbei das Silagematerial zu verstehen, dass bei auf den Boden abgesenktem Schneidbalken zwischen Schneidbalken und Förderwalze liegt und von der Förderwalze nicht erfasst werden kann, da ein weiteres Absenken des mit Anschlagpunkten auf dem Boden aufliegenden Schneidbalkens nicht möglich ist. In dieser Situation ist es vorteilhaft, den Schneidbalken aus der Arbeitsposition A in die Position B zu verschwenken. Der ganze Futtermischwagen und mit ihm die Förderwalze kann dann bis an die vom Schneidbalken erzeugte Schnittkante heranfahren und die bereits geschnittene, am Boden liegende, Silage aufnehmen, so dass die nach dem Wegfahren des Futtermischwagens vor dem Silo verbleibende Restgutmenge minimiert ist.

Weiterhin ist es nicht ausgeschlossen, dass der Schneidbalken zur Aufnahme von Spezialfutter, wie beispielsweise körnigem Kraftfutter, nur teilweise abgesenkt wird. Der Futtermischwagen kann dann beispielsweise an das körnige Futter heranfahren, wobei die Förderwalze das Futter dann nach einer Art "Staubsaugereffekt" erfasst und zum Förderband transportiert.

In einer weiteren Ausführungsform sind an den Seiten der Leitvorrichtung Schneidmesser angeordnet.

Zwar verfügt auch die Förderwalze seitlich über Schneidklingen, welche den vom Umfangskreis dieser Schneidklingen überstrichenen Bereich schneidend vom Flachsilo abtrennt, jedoch verbleibt an den schmalen seitlichen Schnittflächen, dort wo im sich verengenden, keilförmigen Raum, zwischen und neben der Leitvorrichtung und dem Umfangkreis der Schneidklingen das Futter von den Schneidklingen nicht erfasst wird, ein Bereich, in dem das Futter nicht geschnitten, sondern weitgehend aus dem Flachsilo herausgelöst wird. Hierdurch entstehen in diesem Bereich Aufrauungen und Ausfransungen, die die Futterqualität mindern, da in diesem Bereich des Flachsilos Eindringen von Luft und Feuchtigkeit erleichtert wird.

Durch die an den Seiten der Leitvorrichtung angeordneten Schneidmesser wird beim Absenken der Schneideinrichtung die Silage somit im Bereich der Seitenschenkel der u-förmigen Futterscheibe nicht aus dem Flachsilo herausgerissen, sondern von der diese Seitenbereich überstreichenden Schneide der Schneidmesser abgetrennt. Zwar ist es grundsätzlich möglich, die Schneidvorrichtung nur mit einem zusätzlichen Schneidmesser auszustatten und so eine L-förmige Anschnittfläche zu erzeugen, jedoch werden vorzugsweise an beiden Seiten der Leitvorrichtung Schneidmesser angebracht, so dass der Anschnitt des Flachsilos, welches deutlich breiter ist, als die Schneidvorrichtung, nicht nur, Futterstreifen für Futterstreifen, von rechts nach links bzw. links nach rechts, erfolgen kann, sondern auch von der Mitte aus, indem dort ein U-förmiger Futterstreifen abgetrennt wird.

Im Bereich der Ausfransungen wird dem Absenken der Entnahmevorrichtung ein Widerstand entgegengesetzt, der durch glatt abgetrennte Schnittflächen noch leistungsmindernd reduziert werden kann.

Vorzugsweise sind die Schneidmesser mit Schneiden versehen, welche seitlich neben den Schneidklingen deren äußeren Umfangkreis durchstoßen. Hierdurch erfolgt eine Überdeckung zwischen dem Bereich der seitlichen Anschnittfläche, welcher durch die auf der Förderwalze angebrachten Schneidklingen vom Flachsilo abgetrennt wird und dem Bereich, welcher von den erfindungsgemäßen Schneidklingen im Freischnitt abgeschnitten wird. Somit ist gewährleistet, dass die Seitenflächen der u-förmigen Futterstreifen vollständig durch einen schneidenden Trennvorgang aus dem Flachsilo herausgetrennt werden.

Im sich überlappenden Bereich wirken Schneidmesser und Schneidklinge scherenartig als Schneide und Gegenschneide.

Das vollständige Herausschneiden des Futterstreifens und der scherenartige Trennvorgang, ist durch die Überlappung, zumindest bis zu einem gewissen Grad, auch dann noch gewährleistet, wenn die Schneidklingen und Schneidmesser durch Verschleiß und Nachschleifen nicht mehr ihre ursprüngliche Größe aufweisen, sondern kleiner geworden sind.

In Abhängigkeit von den individuellen Bedingungen, beispielsweise von der Silageart, kann es vorteilhaft sein die Schneidklingen an der Außenseite der Schneidmesser vorbeilaufen zu lassen. Unter anderen Bedingungen kann es günstig sein, die Schneidklingen an der Innenseite der entlanglaufen zu lassen. Vorteilhaft ist es in beiden Fällen, wenn zwischen Schneidmesser und Schneidklinge ein spitzer Winkel x bzw. y vorgesehen ist, wodurch die Gefahr einer Kollision bzw. eines Ineinandergreifens von Schneidmesser und Klinge reduziert wird.

Die Form der Schneide kann gerade, konvex oder konkav sein. Welche Ausführungsform bevorzugt wird, ist abhängig von den individuellen Einsatzverhältnissen und ggf. auch von den Herstellkosten der Schneidmesser.

In einer bevorzugten Ausführungsform sind die Schneiden der Schneidmesser mit einer Profilierung versehen sind. Eine solche Profilierung, bei der es sich beispielsweise um einen wellenartigen Anschliff oder eine gezackte Kontur handeln kann, kann sich, zumindest zum Teil in Abhängigkeit von den Einsatzbedingungen, positiv auf die aufzuwendende Schneidkraft oder das Verschleißverhalten auswirken.

Nachstehend wird die Erfindung an einem Ausführungsbeispiel beschrieben und in den Zeichnungen dargestellt.

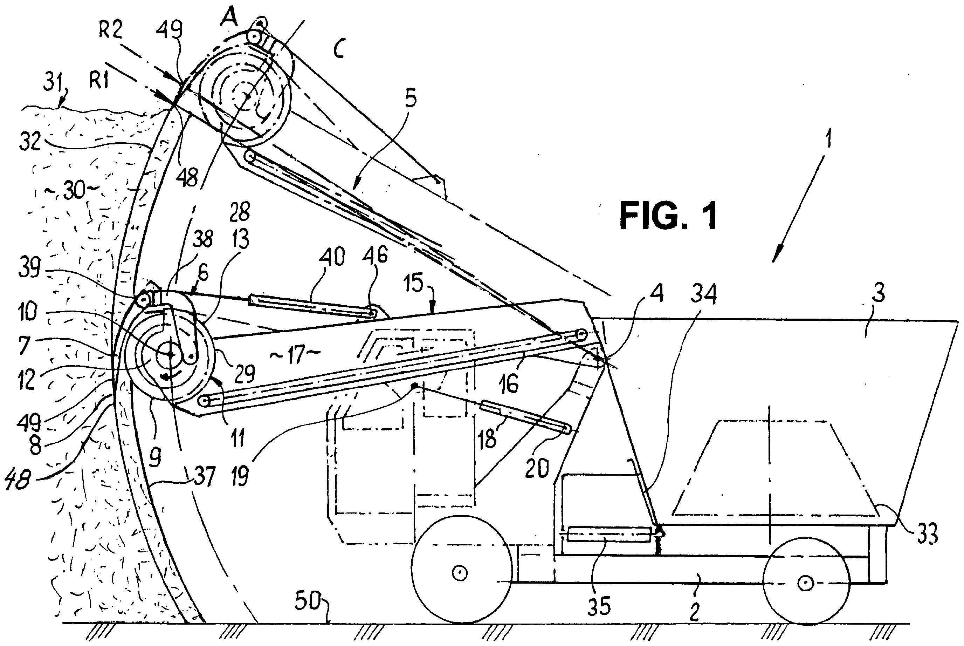

- Fig. 1: zeigt die Seitenansicht des Gerätes und die Anordnung an einem selbstfahrenden Futtermischwagen bei der Futteraufnahme.
- Fig. 2: zeigt eine weitere Ansicht bei der Restgutaufnahme.

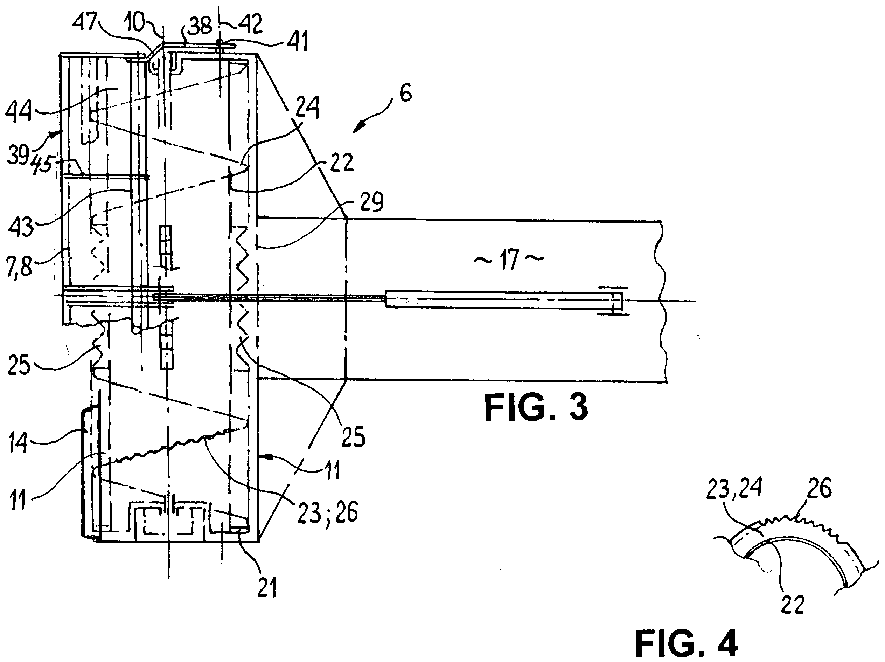

- Fig. 3: zeigt eine Draufsicht auf die Entnahmevorrichtung,
- Fig. 4: zeigt eine Profilierung am Umfang der Förderspiralen.
- Fig. 5: zeigt die Entnahmevorrichtung am teilweise dargestellten Schwenkarm eines nicht abgebildeten Futtermischwagens.
- Fig. 6: zeigt die Ausführungsformen der Schneidmesser.
- Fig. 7: zeigt eine Draufsicht nach Fig. 5.
- Fig. 8: zeigt die Anordnung von Schneidmesser und Schneidklinge im sich überdeckenden Schnittbereich.

Das Gerät (5) zur Futterentnahme ist an einem selbstfahrenden Futtermischwagen (1) an dessen Fahrgestell (2) oder Mischbehälter (3), um die Achse (4) schwenkbar gelagert. Es besteht im Wesentlichen aus dem Schwenkarm (15) und der Entnahmevorrichtung (6).

Der auf der Achse (4) gelagerte Schwenkarm (15) ist mit einem Förderband (16) ausgestattet, welches in einem Förderschacht (17) umläuft, er trägt an seinem äußeren Ende die Entnahmevorrichtung (6). Die Schwenkbewegungen werden über die an den Lagern (19, 20) angreifenden Hubzylinder (18) gesteuert.

Die Entnahmevorrichtung (6) besteht aus einem Gehäuse (11) dessen Gehäusemantel (13) an seiner Rückseite (28) mit dem Förderschacht (17) verbunden ist. Die Verbindungsstelle bildet eine Öffnung (29), die als Übergang des Futters von der Entnahmevorrichtung (6) in den Förderschacht (17) ausgebildet ist. Seitlich wird der Gehäusemantel (13) von Seitenwänden (12) begrenzt, in welchen auf einer Achse (10) eine Förderwalze (9) gelagert ist. Entlang des vorn offenen Gehäuses (11) ist oben am Rand des Gehäusemantels (13) eine Abstreifleiste (14) angebracht, deren Spitze bis nah an die in Position (A) befindliche Stirnwand (44) heranreicht. Ferner sind an den Seitenwänden (12), auf einer parallelen zur Achse (10) der Förderwalze liegenden Mittelachse (42), beidseitig Achszapfen (41) angebracht, auf denen eine Leitvorrichtung (39) schwenkbar gelagert ist, diese besteht im Wesentlichen aus auf den Achszapfen (41) gelagerten, sichelförmigen, mittels eines Querrohres (43) verbundenen Hebeln (38), die am Querrohr (43) eine haubenförmige, durch Stege (45) verstärkte Stirnwand (44) tragen, an welcher am unteren Ende ein Schneidbalken (7), vorzugsweise mit einem waagerechten Schneidmesser (8), mit nach unten gerichteten Schneiden, angeordnet ist. Der Antrieb der Schneidmesser (8) erfolgt in bekannter Weise hydraulisch. Am Schneidbalken (7) sind auch Doppelmesser oder andere bewährte Trennmittel verwendbar.

Die Stirnwand (44) und ihr Schneidbalken (7) besitzen die gleiche Breite wie das Gehäuse (11) der Förderwalze (9). Damit die seitlich neben dem Gehäuse (11) gelagerten Hebel (38), beim Abtrennen vom Futter nicht mit dem Flachsilo (30) in Berührung kommen, sind diese sichelförmig ausgebildet und oberhalb des Gehäuses (11) so weit verkröpft, dass der Anschluss (47) an das Querrohr (43) nicht seitlich über das Gehäuse (11) hervorsteht.

Die Leitvorrichtung (39) ist mittels eines Hydrozylinders (40), der am Querrohr (43) angreift und sich am Förderschacht (17) am Lagerbock (46) abstützt, von einer Position (A) in die Position (B) verschwenkbar. Die Position (A) wird in Arbeits-, Ruhe- und Transportstellung und die Position (B) bei der Aufnahme vom Restgut am Flachsilo oder auch zur Aufnahme von haufenförmig am Boden gelagerten Futtermitteln verwendet.

Die Förderwalze (9) trägt auf ihrem Walzenrohr (22) Förderspiralen (23, 24), deren Förderrichtung jeweils von außen zur Mitte gerichtet ist und im Bereich vor der Öffnung (29) zum Förderschacht (17) Wurfpaddel (25). Um die Griffigkeit der Förderspiralen (23, 24) zu steigern, können diese am Umfang mit Zacken (26) oder ähnlichen Profilierungen ausgestattet sein.

Zur Futterentnahme fährt der Futtermischwagen (1) mit der über Hubzylinder (18) in die Position (C) hochgeschwenkte Entnahmevorrichtung (6) an die Oberkante (31) des Flachsilos (30) heran, bis der Schneidbalken (7) so weit über dem Silostock steht, dass beim Absenken ein Futterstreifen der Dicke (D) entlang einer Schnittlinie (32), von der Stirnwand (37) des Flachsilos mittels des oszillierenden Schneidmessers (8) abgetrennt wird. Die relativ langsam rotierende Förderwalze (9), die mit seitlich angebrachten Klingen (21) ausgerüstet ist, übernimmt das abgetrennte Futter und fördert es oberschlächtig und strukturschonend innerhalb des Gehäuses (11), unter geringem Leistungsbedarf, zur Öffnung (29) des Förderschachtes (17) wo es durch die Wurfpaddel (25) unterstützt, an das Förderband (16) übergeben und in den Mischbehälter (3) gefördert wird, wo es von Mischschnecken (33) mit anderen Futterarten- oder Komponenten vermischt und danach durch eine Luke (34) über ein Querförderband (35) seitlich in einem Futtergang abgelegt wird.

Das Entnahmeverfahren umfasst das Heranführen des Gerätes zur Futterentnahme (5) an die Oberseite des Flachsilos (30). Im Anschluss daran erfolgt ein vorzugsweise kontinuierliches Absenken des Gerätes, wobei mittels eines Schneidbalkens (7), an dessen Unterseite sich die Messerspitzen (48) befinden, Silage vom Flachsilo (30) abgetrennt und eine sich durch das Flachsilo abwärts bewegende Schnittlinie (32) erzeugt wird. Vorzugsweise bewegen sich die Messerspitzen (7) auf einem Radius (R1), der geringfügig kleiner ist, als ein durch den äußersten Konturpunkt (49) des in Stellung (A) abgesenkten Schneidbalkens definierter Radius (R2).

Sobald die Förderwalze (9) im Verlauf der Abwärtsbewegung des Gerätes (5) mit der an der Schnittlinie (32) vom Flachsilo (30) bereits abgetrennten Silage in Berührung kommt, wird diese Silage von den auf der Förderwalze (9) angebrachten Förderspiralen (23, 24) erfasst, wobei die Drehrichtung der Förderwalze (9) gegenläufig zur Bewegungsrichtung des Gerätes (5) ist. Die mit der Förderwalze in Kontakt kommende Silage wird von den schneckenförmigen Förderspiralen (23, 24) erfasst und innerhalb eines durch die Innenseiten von Stirnwand (44) und Gehäuse (11) gebildeten Förderkanals zur Mitte und damit dem Förderband (16) zugeführt. Im mittleren Bereich der Förderwalze (9) angeordnete Wurfpaddel (25) unterstützen die Übergabe des Futtermaterials an das Förderband (16), welches die Silage in den Mischbehälter (3) weiterleitet.

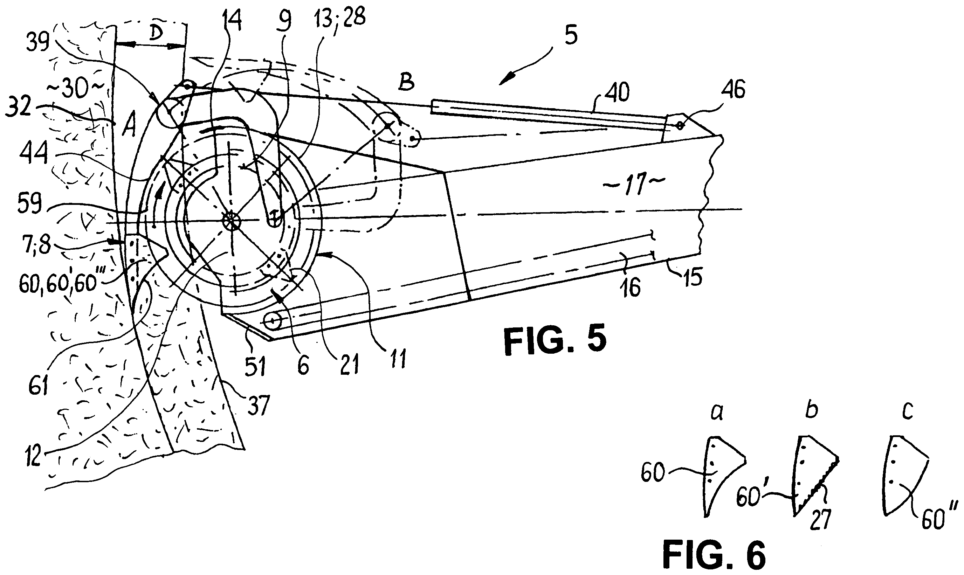

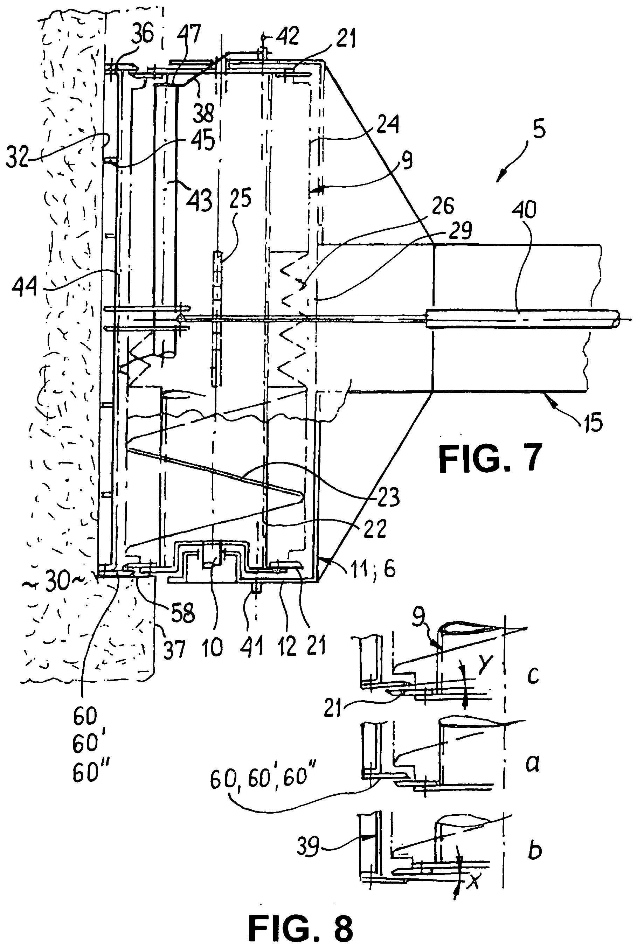

Die Figuren 5 und 7 zeigen das Gerät (5) zur Futterentnahme aus Flachsilos (30) mit dem nur teilweise dargestellten Schwenkarm (15) in einer Ausführungsform mit an den Seiten der Leitvorrichtung (39) angebrachten Schneidmessern (60, 60', 60"). Die Schneidmesser (60, 60', 60") überdecken einen zwischen Umfangkreis (59) und Stirnwand (44) befindliche Bereich und erweitern die durch die Schneidmesser (8) erzeugte gerade Schnittlinie zu einer U-förmigen Schnittlinie, so dass auch der zwischen Umfangkreis (59) und Stirnwand (44) befindliche seitliche Bereich eine saubere Schnittfläche erhält.

An der seitlichen Schnittfläche (58) erfolgt die Abtrennung des Futters vom Flachsilo (30) mittels der an den äußeren Enden der Förderwalze (9) angebrachten, umlaufenden Schneidklingen (21) und in dem, von diesen nicht bestrichenen, zwischen Umfangkreis (59) der Schneidklingen (21) und der Schnittlinie (32) der Stirnwand befindlichen Zwischenraum, durch Schneidmesser (60; 60'; 60"), welche an den Seiten (36) der Leitvorrichtung (39) starr angeordnet sind und mit ihren Spitzen den Umfangkreis (59) durchstoßen.

Vorzugsweise werden die Schneiden (61) der Schneidmesser (60) konkav ausgeführt, bedarfsweise können sie geradlinig (60') bzw. konvex (60") ausgeführt sein (siehe Figur 6). Die Befestigung der Schneidmesser (60; 60'; 60") erfolgt vorzugsweise mittels Schraubverbindung, um Austauschbarkeit zu gewährleisten. Die Schneidmesser (60; 60'; 60") durchstoßen den Umfangkreis (59) wahlweise an der Außen- oder Innenseite der umlaufenden Schneidklingen (21), nahe neben diesen.

Versuche haben gezeigt, dass neben der parallelen Einstellung zwischen Schneidmesser (60; 60'; 60") und Schneidklinge (21) (Fig. 8a) eine geringe Schrägstellung der Schneidmesser (60; 60'; 60") die Schneidarbeit erleichtert. Soweit die Schneidmesser (60; 60'; 60") an der Innenseite der Schneidklingen (21) entlang geführt sind, sich also zwischen den Schneidklingen (21) befinden, erfolgt die Schrägstellung, indem die Schneidmesser (60; 60'; 60") unter einem nach innen gerichteten Winkel (y) an der Leitvorrichtung (39) angebracht sind. Soweit die Schneidmesser (60; 60'; 60") an der Außenseite der Schneidklingen (21) entlang geführt sind, die Schneidklingen also umfassen, erfolgt die Schrägstellung, indem die Schneidmesser (60; 60'; 60") unter einem nach außen gerichteten Winkel (x) an der Leitvorrichtung (39) angebracht sind.

Die Schneiden (61) der Schneidmesser (60; 60' ; 60") können mit einer zacken- oder wellenförmigen Profilierung (27) ausgestattet sein, oder glattlinig verlaufen.

Damit oberhalb der Schneidmesser (60; 60'; 60"), seitlich kein aufquellendes Futter gegen die erzeugte Schnittfläche (58) drückt und so Aufrauungen verursacht, sind die Schneidmesser (60; 60'; 60") so gestaltet, dass der Raum zwischen Umfangkreis (59) und Stirnwand (44) seitlich von diesen überdeckt wird.

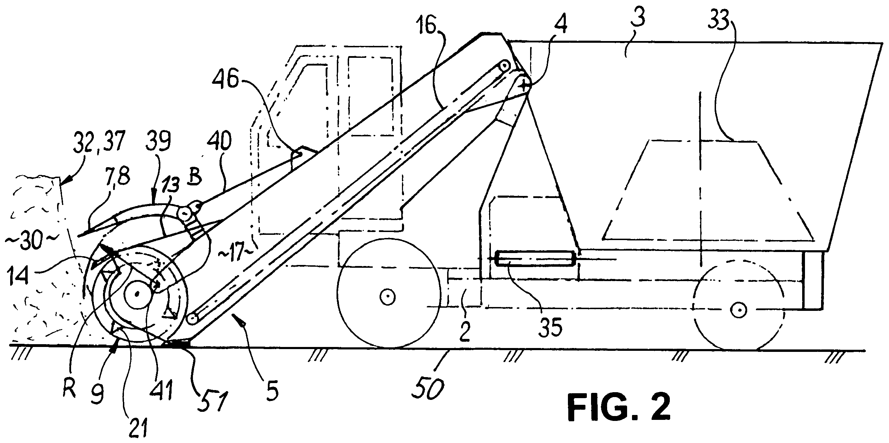

Die bei der Futterentnahme aus dem Flachsilo (30) anfallenden Rieselverluste, die sich am Boden (50) vor der Stirnwand (37) ablagern, werden bei bis zum Boden (50) abgesenkter Entnahmevorrichtung (6), bei rotierender Förderwalze (9) und in Position (B) befindlicher Leitvorrichtung (39), durch Heranfahren des Futtermischwagens (1) bis an die Stirnwand (37) aufgenommen (s. Fig. 2). Bei bis zum Boden (50) abgesenkter Entnahmevorrichtung (6) liegt eine am Gehäuse (11) angebrachte Schürfschiene (51) auf dem Boden auf. Um den Verschleiß der auf dem Boden (50) aufliegenden Schürfschiene beim Fahren zu reduzieren können hinter der Schürfschiene (51) zusätzliche, nicht näher dargestellte, Rollen angebracht sein.

Die auf dem Boden (50) aufliegende Schürfschiene (51) dichtet einen zwischen Förderwalze (9) und Förderband (16) befindlichen Innenraum des Gehäuses (11) weitgehend ab, so dass die rotierende Förderwalze (9) eine Art Sog- bzw. Staubsaugereffekt bewirkt, der das aufzunehmende Restgut dem im Förderschacht (17) befindlichen Förderband (16) zuführt. Das Förderband (16) transportiert das zugeführte Restgut in den Mischbehälter (3) und unterstützt hierbei den geschilderten Staubsaugereffekt.

**Bezugszeichenliste:**

| | | | |
|---|---|---|---|
| 1 | Futtermischwagen | 36 | Seite |
| 2 | Fahrgestell | 37 | Stirnwand |
| 3 | Mischbehälter | 38 | Hebel |
| 4 | Achse | 39 | Leitvorrichtung |
| 5 | Gerät zur Futterentnahme | 40 | Hydrozylinder |
| 6 | Entnahmevorrichtung | 41 | Achszapfen |
| 7 | Schneidbalken | 42 | Mittelachse |
| 8 | Schneidmesser | 43 | Querrohr |
| 9 | Förderwalze | 44 | Stirnwand |
| 10 | Achse | 45 | Steg |
| 11 | Gehäuse | 46 | Lagerbock |
| 12 | Seitenwand | 47 | Anschluss |
| 13 | Gehäusemantel | 48 | Messerspitze |
| 14 | Abstreifleiste | 49 | Konturpunkt |
| 15 | Schwenkarm | 50 | Boden |
| 16 | Förderband | 51 | Schürfschiene |
| 17 | Förderschacht | | |
| 18 | Hubzylinder | 58 | Schnittfläche |
| 19 | Lager | 59 | Umfangskreis |
| 20 | Lager | 60 | Schneidmesser (konkave Schneide) |
| 21 | Schneidklinge | 60' | Schneidmesser (gerade Schneide) |
| 22 | Walzenrohr | 60" | Schneidmesser (konvexe Schneide) |
| 23 | Förderspirale | 61 | Schneide |
| 24 | Förderspirale | | |
| 25 | Wurfpaddel | A | Position (Arbeitsstellung) |
| 26 | Zacke | B | Position (Restgutaufnahme) |
| 27 | Profilierung | C | Position (oben) |
| 28 | Rückseite | D | Dicke |
| 29 | Öffnung | R | Radius |
| 30 | Flachsilo | R1 | Radius |
| 31 | Oberkante | R2 | Radius |
| 32 | Schnittlinie | X | Winkel |
| 33 | Mischschnecke | Y | Winkel |
| 34 | Luke | | |
| 35 | Querförderband | | |

## Patentansprüche

1. Gerät zur Futterentnahme (5) aus Futtervorratslagern, insbesondere aus Flachsilos (30), welches schwenkbar an einem Futtermischwagen (1) anbringbar ist und am äußeren Ende seines mit einem Förderband (16) ausgestatteten und einen Förderschacht bildenden Schwenkarms (15) eine Entnahmevorrichtung (6) trägt, welche stirnseitig an Flachsilos (30) Silage abtrennt und diese dem Förderband (16) zur Weiterleitung in einen Mischbehälter (3) übergeben kann, wobei
- die Entnahmebreite die Förderschachtbreite des Schwenkarms (15) merklich übersteigt,
- die Entnahmevorrichtung (6) mit einer Förderwalze (9) und einer verschwenkbaren Leitvorrichtung (39) ausgestattet ist,
- die Förderwalze (9) Förderspiralen (23, 24) umfasst, deren Förderrichtung jeweils von außen zur Mitte gerichtet ist, so dass die mit der Förderwalze (9) in Kontakt kommende Silage dem Förderband (16) zugeführt wird,
- die Förderwalze (9) das abgetrennte Futter innerhalb eines durch die Innenseiten einer Stirnwand (44) und eines Gehäuses (11) gebildeten Förderkanals zur Öffnung (29) des Förderschachtes (17) fördert,
**dadurch gekennzeichnet, dass**
die Leitvorrichtung (39) die Stirnwand (44) umfasst, an welcher am unteren Ende ein Schneidbalken (7) angeordnet ist und wobei die Stirnwand (44) den Schneidbalken (7) trägt, so dass bei der Futterentnahme aus einem Flachsilo (30) der Schneidbalken (7) das Futter aus dem Silostock abtrennt und dieses mit der dahinter liegenden Förderwalze (9) weggeleitet wird.

2. Gerät nach Anspruch 1, **dadurch gekennzeichnet, dass** die Leitvorrichtung (39) um eine zur Achse (10) der Förderwalze (9) parallel versetzten Mittelachse (42) verschwenkbar ist.

3. Gerät nach einem der Ansprüche 1 oder 2, **dadurch gekennzeichnet, dass** eine am Gehäusemantel (13) angeordnete Abstreifleiste (14) bis nah an die Innenseite der vom Radius (R) gebildeten Rundung der Stirnwand (44) heranreicht.

4. Gerät nach einem der Ansprüchen 1 bis 3, **dadurch gekennzeichnet, dass** die Förderwalze (9) am äußeren Umfang ihrer Förderspiralen (23, 24) mit Zacken (26) versehen ist.

5. Gerät nach einem der Ansprüchen 1 bis 4, **dadurch gekennzeichnet, dass** die Förderwalze (9) in einer Überkopf fördernden Drehrichtung rotiert.

6. Gerät nach einem der Ansprüchen 1 bis 5, **dadurch gekennzeichnet, dass** die Förderwalze (9) an ihren äußeren Enden mit Schneidklingen (21) besetzt ist.

7. Gerät nach Anspruch 1 oder einem weiteren Anspruch, **dadurch gekennzeichnet, dass** die Hebel (38) am Anschluss (47) zur Stirnwand (44) verkröpft sind.

8. Gerät nach Anspruch 1 oder einem weiteren Anspruch, **dadurch gekennzeichnet, dass** die Hebel (38) sichelförmig gestaltet sind.

9. Gerät nach Anspruch 1 oder einem weiteren Anspruch, **dadurch gekennzeichnet, dass** bei in Position (A) eingeschwenktem Schneidbalken (7) der Abstand von der Messerspitze (48) des Schneidbalkens (7) zur Achse (4) des Gerätes zur Futterentnahme (5) einen Radius (R1) definiert, der kleiner ist als ein durch den Abstand zwischen einem äußeren Konturpunkt (49) des Schneidbalkens (7) und der Achse (4) des Gerätes zur Futterentnahme (5) definierter Radius (R2).

10. Gerät nach Anspruch 1 oder einem weiteren Anspruch, **dadurch gekennzeichnet, dass** eine Restgutaufnahme bei in Position B verschwenktem Schneidbalken (7) erfolgt.

11. Gerät nach Anspruch 10, **dadurch gekennzeichnet, dass** die Drehrichtung der Förderwalze (9) zur Restgutaufnahme gewechselt werden kann, so dass die Förderwalze (9) zur Restgutaufnahme unterschlächtig arbeitet.

12. Gerät nach Anspruch 1 oder einem der folgenden Ansprüche, **dadurch gekennzeichnet, dass** an den Seiten (36) der Leitvorrichtung (39) Schneidmesser (60; 60'; 60") angeordnet sind.

13. Gerät nach Anspruch 12, **dadurch gekennzeichnet, dass** die Schneidmesser (60; 60'; 60") mit Schneiden (61) versehen sind, welche seitlich neben den Schneidklingen (21), deren äußeren Umfangkreis (59) durchstoßen.

14. Gerät nach Anspruch 12 oder 13, **dadurch gekennzeichnet, dass** die Förderwalze (9) Schneidklingen (21) umfasst, welche an den Außenseiten der Schneidmesser (60; 60'; 60") vorbeilaufen.

## Claims

1. Device for removing feed (5) from feed supply stores, in particular from flat silos (30), which device is attachable pivotably to a feed-mixing wagon (1) and, at the outer end of its pivoting arm (15), which is provided with a conveyor belt (16) and forms a conveyor shaft, bears a removal apparatus (6) which severs silage on the end side of flat silos (30) and can transfer said silage to the conveyor belt (16) for forwarding into a mixing container (3), wherein
- the removal width noticeably exceeds the conveyor shaft width of the pivoting arm (15),
- the removal apparatus (6) is provided with a conveyor roller (9) and a pivotable directing apparatus (39),
- the conveyor roller (9) comprises conveyor screws (23, 24), the conveying direction of which is in each case directed from the outside to the centre, and therefore the silage coming into contact with the conveyor roller (9) is supplied to the conveyor belt (16),
- the conveyor roller (9) conveys the severed feed within a conveyor passage, which is formed by the inner sides of an end wall (44) and of a housing (11), to the opening (29) of the conveyor shaft (17),
**characterized in that** the directing apparatus (39) comprises the end wall (44) on which a cutting bar (7) is arranged at the lower end, and wherein the end wall (44) supports the cutting bar (7), and therefore, during the removal of feed from a flat silo (30), the cutting bar (7) severs the feed from the silo stock and said feed is directed away by means of the conveyor roller (9) located therebehind.

2. Device according to Claim 1, **characterized in that** the directing apparatus (39) is pivotable about a centre axis (42) which is offset parallel to the axis (10) of the conveyor roller (9).

3. Device according to either of Claims 1 and 2, **characterized in that** a scraper bar (14) arranged on the housing casing (13) extends to close to the inner side of the rounding in the end wall (44), said rounding being formed by the radius (R).

4. Device according to one of Claims 1 to 3, **characterized in that** the conveyor roller (9) is provided with teeth (26) on the outer circumference of its conveyor screws (23, 24).

5. Device according to one of Claims 1 to 4, **characterized in that** the conveyor roller (9) rotates in an overhead-conveying direction of rotation.

6. Device according to one of Claims 1 to 5, **characterized in that** the conveyor.roller (9) is fitted with cutting blades (21) at its outer ends.

7. Device according to Claim 1 or a further claim, **characterized in that** the levers (38) are bent at the connection (47) to the end wall (44).

8. Device according to Claim 1 or a further claim, **characterized in that** the levers (38) are of sickle-shaped configuration.

9. Device according to Claim 1 or a further claim, **characterized in that**, when the cutting bar (7) is pivoted into position (A), the distance of the knife point (48) of the cutting bar (7) from the axis (4) of the device for removing feed (5) defines a radius (R1) which is smaller than a radius (R2) defined by the distance between an outer contour point (49) of the cutting bar (7) and the axis (4) of the device for removing feed (5).

10. Device according to Claim 1 or a further claim, **characterized in that** picking up of residual material takes place when the cutting bar (7) is pivoted into position B.

11. Device according to Claim 10, **characterized in that** the direction of rotation of the conveyor roller (9) can be changed for picking up residual material, and therefore the conveyor roller (9) operates in an undershot manner for picking up residual material.

12. Device according to Claim 1 or one of the following claims, **characterized in that** cutting knives (60; 60'; 60") are arranged on the sides (36) of the directing apparatus (39).

13. Device according to Claim 12, **characterized in that** the cutting knives (60; 60'; 60") are provided with cutting edges (61) which, laterally next to the cutting blades (21), pierce the outer circumferential circle (59) thereof.

14. Device according to Claim 12 or 13, **characterized in that** the conveyor roller (9) comprises cutting blades (21) which run past the outer sides of the cutting knives (60; 60'; 60").

## Revendications

1. Appareil destiné à prélever du fourrage (5) depuis des réserves de fourrage, notamment depuis des silos plats (30), pouvant être placés de façon à pouvoir pivoter au niveau d'un chariot de mélange de fourrage (1) et supportant, au niveau de l'extrémité extérieure de son bras mobile (15) équipé d'un tapis de transport (16) et formant un puits d'extraction, un dispositif de prélèvement (6) séparant l'ensilage, du côté avant, au niveau des silos plats (30) et pouvant transférer cet ensilage au tapis de transport (16) pour le transfert dans un récipient de mélange (3) ;
- la largeur de prélèvement dépassant significativement la largeur du puits d'extraction du bras mobile (15) :
- le dispositif de prélèvement (6) étant équipé d'un rouleau de transport (9) et d'un dispositif de guidage (39) pouvant pivoter ;
- le rouleau de transport (9) comprenant des spirales de transport (23, 24) dont la direction de transport est respectivement orientée de l'extérieur vers le centre, de sorte que l'ensilage entrant en contact avec le rouleau de transport (9) soit amené au tapis de transport (16) ;
- le rouleau de transport (9) transportant le fourrage séparé à l'intérieur d'un canal de transport formé par les côtés intérieurs d'une paroi avant (44) et d'un carter (11) en direction de l'ouverture (29) du puits d'extraction (17) ;
**caractérisé en ce que** :
le dispositif de guidage (39) comprend la paroi avant (44) au niveau de laquelle une barre tranchante (7) est disposée au niveau de l'extrémité inférieure et la paroi avant (44) supportant la barre tranchante (7), de sorte que lors du prélèvement de fourrage hors d'un silo plat (30), la barre tranchante (7) sépare le fourrage pour l'amener hors du stock du silo et l'amène hors du silo avec le rouleau de transport (9) placé derrière.

2. Appareil selon la revendication 1, **caractérisé en ce que** le dispositif de guidage (39) peut être pivoté autour d'un axe central (42) décalé parallèlement à l'axe (10) du rouleau de transport (9).

3. Appareil selon l'une quelconque des revendications 1 ou 2, **caractérisé en ce qu'**une baguette déflectrice (14) disposée au niveau de l'enveloppe de carter (13) atteint presque le côté intérieur de l'arrondi de la paroi avant (44) formé par le rayon (R).

4. Appareil selon l'une quelconque des revendications 1 à 3, **caractérisé en ce que** le rouleau de transport (9) est pourvu de pics (26) au niveau de la périphérie extérieure de ses spirales de transport (23, 24).

5. Appareil selon l'une quelconque des revendications 1 à 4, **caractérisé en ce que** le rouleau de transport (9) tourne dans une direction de rotation effectuant le transport en hauteur au-dessus du niveau de la tête.

6. Appareil selon l'une quelconque des revendications 1 à 5, **caractérisé en ce que** le rouleau de transport (9) est pourvu de lames tranchantes (21) au niveau de ses extrémités extérieures.

7. Appareil selon la revendication 1 ou une autre revendication, **caractérisé en ce que** les leviers (38) sont coudés au niveau du raccordement (47) avec la paroi avant (44).

8. Appareil selon la revendication 1 ou une autre revendication, **caractérisé en ce que** les leviers (38) sont réalisés en forme de faucille.

9. Appareil selon la revendication 1 ou une autre revendication, **caractérisé en ce qu'**en cas de barre tranchante (7) pivotée vers l'intérieur dans la position (A), la distance de la pointe du couteau (48) de la barre tranchante (7) par rapport à l'axe (4) de l'appareil destiné à prélever du fourrage (5) définit un rayon (R1) inférieur à un rayon (R2) défini par la distance entre un point de contour extérieur (49) de la barre tranchante (7) et l'axe (4) de l'appareil destiné à prélever du fourrage (5).

10. Appareil selon la revendication 1 ou une autre revendication, **caractérisé en ce qu'**une réception de produit restant se produit lorsque la barre tranchante (7) est pivotée dans la position B.

11. Appareil selon la revendication 10, **caractérisé en ce que** la direction de rotation du rouleau de transport (9) peut être inversée pour recevoir le produit restant, de sorte que le rouleau de transport (9) travaille en dessous du puits pour recevoir le produit restant.

12. Appareil selon la revendication 1 ou l'une quelconque des revendications suivantes, **caractérisé en ce que** des systèmes de coupe (60 ; 60' ; 60") sont disposés au niveau des côtés (36) du dispositif de guidage (39).

13. Appareil selon la revendication 12, **caractérisé en ce que** les systèmes de coupe (60 ; 60' ; 60") sont pourvus de tranchants (61) transportant en côté, à côté des lames de coupe (21), leur cercle périphérique (59) extérieur.

14. Appareil selon la revendication. 12 ou 13, **caractérisé en ce que** le rouleau de transport (9) comprend les lames de coupe (21) passant à côté, au niveau des côtés extérieurs des systèmes de coupe (60 ; 60' ; 60").
